Europäisches Patentamt

(19) European Patent Office

Office européen des brevets

(11) Numéro de publication: **0 244 313**
**A1**

(12) **DEMANDE DE BREVET EUROPEEN**

(21) Numéro de dépôt: **87400953.3**

(22) Date de dépôt: **24.04.87**

(51) Int. Cl.³: **C 01 G 23/00**
**C 04 B 35/46**

(30) Priorité: **29.04.86 FR 8606204**

(43) Date de publication de la demande:
**04.11.87 Bulletin 87/45**

(84) Etats contractants désignés:
**DE GB IT NL**

(71) Demandeur: **COMPAGNIE EUROPEENNE DE COMPOSANTS ELECTRONIQUES LCC**
**50, rue Jean -Pierre Timbaud B.P. 301**
**F-92402 Courbevoie(FR)**

(72) Inventeur: **Beauger, Alain**
**THOMSON-CSF SCPI 19, avenue de Messine**
**F-75008 Paris(FR)**

(72) Inventeur: **Wittmann, Roland**
**THOMSON-CSF SCPI 19, avenue de Messine**
**F-75008 Paris(FR)**

(74) Mandataire: **Ruellan-Lemonnier, Brigitte et al,**
**THOMSON-CSF SCPI 19, avenue de Messine**
**F-75008 Paris(FR)**

(54) **Procédé de purification des chamottes des titanates des métaux alcalino-terreux.**

(57) L'invention concerne un procédé de purification des chamottes des titanates des métaux alcalino-terreux, par exemple du titanate de baryum, des impuretés résultant des phases non désirées de ses constituants. Le procédé consiste à mettre en présence, pendant une durée déterminée, la chamotte considérée avec un milieu de lavage constitué d'une solution faiblement acide additionnée d'eau oxygénée, puis à séparer la partie minérale, représentant le titanate, et le milieu de lavage.

EP 0 244 313 A1

# PROCEDE DE PURIFICATION DES CHAMOTTES
## DES TITANATES DES METAUX ALCALINO-TERREUX.

La présente invention concerne un procédé de fabrication permettant d'améliorer le comportement des poudres de titanate en solution ainsi que la réalisation pratique de condensateurs disques ou multicouches.

Les compositions céramique à base de titanate sont bien connues notamment dans leurs applications pour la réalisation de condensateurs. Elles possèdent en effet une très haute constante diélectrique (environ 2000) les rendant tout à fait adaptées à une telle utilisation.

Les espèces constitutives de telles compositions sont mélangées par voie aqueuse et la poudre ainsi obtenue après séchage est mise en forme pour obtenir des condensateurs disques ou multicouches. L'obtention de tels condensateurs peut être perturbée si les chamottes de titanate utilisées présentent des caractéristiques physico-chimiques particulières. Le pressage des disques présente des défauts (feuilletage, effritement...), et le coulage organique n'est pas reproductible dans le cas des condensateurs multicouches.

L'étude des chamottes obtenues soit par synthèse thermique, soit par synthèse chimique, a permis de mettre en évidence la présence de phases autres que les systèmes pérovskites recherchés ($BaTiO_3$, $SrTiO_3$, $CaTiO_3$). Par exemple, dans le cas du titanate de baryum, ce sont des phases apparentées à l'orthotitanate de baryum (($Ba_2TiO_4$) ou des phases riches en baryum ($xBaO$, $yTiO_2$ ou $y/x < 0,5$), et des phases amorphes. Ces composés sont partiellement solubles en milieu aqueux, et la présence de baryum et de titane en solution modifie le comportement rhéologique des poudres, et la facilité de mise en forme des condensateurs. Ce phénomène est également observable sur des chamottes obtenues par coprécipitation.

La présente invention consiste en un procédé permettant d'éliminer les phases riches en alcalino-terreux afin de faciliter la technologie de mise en forme des condensateurs. La solubilité de ces phases est donc mise à profit pour extraire les cations après attaque chimique des chamottes. Les alcalino-terreux se carbonatent à l'air partiellement ; il est donc nécessaire de se placer en milieu acide pour éviter cette carbonatation. Cependant, le milieu doit être faiblement acide pour éviter une attaque du métatitanate de l'alcalino-terreux considéré.

Le titane doit également être éliminé de la solution, cependant l'hydroxyde de titane précipite dans les milieux faiblement acides, et risque de perturber la rhéologie des mélanges et le comportement ultérieur des céramiques. Afin d'avoir un compromis acceptable entre la nécessité d'être en milieu faiblement acide et celle d'éviter la formation de $Ti(OH)_4$, le titane est complexé par l'eau oxygénée, au fur et à mesure de l'attaque chimique des phases riches en alcalino-terreux.

L'invention a donc pour objet un procédé de purification d'une chamotte de titanate d'un métal alcalino-terreux des impuretés résultant de phases non désirées de ses constituants, caractérisé en ce qu'il consiste à mettre en présence, pendant une durée déterminée, ladite chamotte avec un milieu de lavage constitué d'une solution faiblement acide additionnée d'eau oxygénée, puis à séparer la partie minérale, représentant le titanate, et le milieu de lavage.

Le reste de la description portera sur le cas précis du titanate de baryum $BaTiO_3$ car c'est le plus largement employé, cependant l'invention s'applique également sans difficultés particulières aux cas du titanate de calcium et du titanate de strontium.

La présence de baryum et de titane en solution est susceptible de modifier radicalement le comportement des poudres en solution. Le mélange en milieu aqueux des chamottes et des différents éléments d'une composition est sujet à des fluctuations en fonction de la nature du titanate de baryum (liées à des modifications de la rhéologie des barbotines). Le coulage en milieu organique peut être également perturbé par la présence de phases réactives vis-à-vis d'un solvant donné. On a constaté de même des fluctuations au niveau du pressage de disques (effrittement, feuilletage...).

Une chamotte obtenue par la voie solide ou par coprécipitation contient des phases riches en baryum susceptibles de passer en solution. On trouve alors du baryum et du titane en solution. Il est nécessaire d'extraire ces cations pour stabiliser la rhéologie des barbotines.

Le baryum en solution se carbonate à l'air partiellement. Il est donc nécessaire de se placer en milieu acide pour éviter cette carbonatation. Cependant, le milieu doit être faiblement acide pour éviter une attaque du métatitanate de baryum $BaTiO_3$.

Le titane doit également être éliminé de la solution, cependant l'hydroxyde de titane précipite dans des milieux faiblement acides, et risque de perturber la rhéologie des barbotines et le comportement ultérieur des céramiques (réduction). Afin d'avoir un compromis acceptable entre la nécessité d'être en milieu faiblement acide et celle d'éviter la formation de $Ti(OH)_4$, le titane est complexé par l'eau oxygénée, au fur et à mesure de l'attaque chimique des phases riches en baryum.

La séparation du titanate de baryum et du milieu d'attaque peut s'effectuer par centrifugation ou par filtre-presse après des lavages successifs.

Après solubilisation des phases riches en baryum, on peut envisager un autre mode de séparation du baryum et du titane en solution. Les cations précités peuvent être capturés par des échangeurs d'ions solides (par exemple des résines) ou liquides.

L'attaque chimique s'effectue toujours à partir d'un milieu faiblement acide et d'un complexant du titane (eau oxygénée). La résine cationique est ajoutée au mélange après attaque. Le baryum et le titane étant piégés par la résine, il suffit de séparer par filtration le titanate de baryum des grains de résine. Celle-ci est ensuite régénérée par élution. Cette technique est plus rapide et plus efficace qu'un simple lavage avec de l'eau distillée. Dans le cas où le titane est introduit sous forme de tétrachlorure, l'élimination des anions chlorure résiduels peut être effectuée grâce à une résine anionique.

Cette résine anionique peut également être utilisée pour

4 0244313

éliminer les anions chlorure provenant de l'utilisation d'acide chlorhydrique dans le cas où c'est cet acide qui est utilisé pour constituer le milieu acide.

Quelques exemples de purification d'une chamotte, donnés à titre non limitatifs, vont illustrer le procédé selon l'invention.

Exemple I.

La chamotte concernée par cet exemple est commercialisée par la société TAM et porte la référence HPB. C'est un produit obtenu par coprécipitation à partir d'oxalates doubles de titane et de baryum. L'analyse du baryum et du titane présents dans les phases riches en baryum montre que le produit comprend 2 % en poids de baryum et 0,48 % en poids de titane.

La poudre constituant la chamotte est mise en présence de 100 $cm^3$ d'une solution d'acide chlorhydrique à 1 pour 100 additionnée d'1 $cm^3$ à 10 $cm^3$ d'eau oxygénée à 110 volumes, pendant une durée de 20 heures. Ensuite, la séparation de la partie minérale et du milieu de lavage est effectuée par centrifugation ou par filtre-presse. Après analyse, la poudre de titanate contient moins de 0,5 % en poids de baryum et 0,07 % en poids de titane solubles.

La chamotte ainsi traitée est testée dans une composition particulière afin de réaliser des condensateurs multicouches.

La composition céramique est élaborée suivant la technologie actuellement utilisée pour réaliser un pavé multicouches : le mélange des espèces est effectué par voie aqueuse, la poudre après séchage est incorporée à un système de liants et de solvants organiques, la barbotine ainsi obtenue est coulée afin de réaliser un film mince de céramique. Cette bande de coulage est ensuite métallisée par les procédés usuels de sérigraphie et par empilement on réalise une structure multicouches. Le brûlage permet l'élimination des liants, et le frittage à haute température entraîne la densification de la céramique.

Les condensateurs ainsi réalisés sont soumis à un certain nombre de tests électriques. Deux essais sont effectués : le premier avec des condensateurs obtenus à partir de poudre non traitée selon le procédé de l'invention, le deuxième avec des condensateurs obtenus à partir de la même chamotte après élimination des phases riches en baryum. Les résultats de ces essais sont regroupés dans le tableau I placé en fin de description. Dans ce tableau, la capacité C du condensateur et la tangente de l'angle de perte tg $\delta$ sont données pour une température de 25°C. La résistance d'isolement Ri est donnée pour une tension de 100 V. Le vieillissement accéléré a été effectué sur 20 pièces pour une durée de 1000 heures. A la lecture de ce tableau, on constate que la capacité d'un condensateur obtenu à partir d'une chamotte traitée est sensiblement plus faible que celle d'un condensateur obtenu à partir d'une chamotte non traitée. Par contre, le facteur de pertes est beaucoup plus faible et la résistance d'isolement est doublée. Les variations de capacité entre - 55°C et + 125°C sont considérables pour les condensateurs réalisés selon l'art antérieur et conduisent à les classer hors norme. Par contre, les variations de capacité entre - 55°C et + 125°C sont très limitées pour les condensateurs réalisés à partir de la chamotte traitée et correspondent à des normes très sévères. Les essais de vieillissement effectués sur 20 pièces montrent que tous les condensateurs selon l'art antérieur claquent pour des tensions de l'ordre de 100 V alors que les condensateurs selon l'invention supportent ces tensions.

Les résultats électriques démontrent clairement que ce type de chamotte n'est pas utilisable directement en technologie multicouches et qu'il est nécessaire de procéder à l'élimination des phases riches en baryum pour obtenir satisfaction.

Le procédé de purification des chamottes selon l'invention permet de résoudre les difficultés de coulage présentées par les chamottes non lavées et le problème du délicat pressage de disques dans le cas de condensateurs disques.

Exemple II.

La chamotte concernée par cet exemple est commercialisée par la société TAM et porte la référence COF 70. C'est un produit obtenu par synthèse thermique entre le carbonate de baryum et l'oxyde de titane. L'analyse du baryum et du titane présents dans les phases riches en baryum montre que le produit comprend 2,08 % en poids de baryum et 0,2 % en poids de titane.

La poudre constituant la chamotte est mise en présence d'une solution comprenant jusqu'à 1 cm³ d'acide chlorhydrique concentré pour 100 cm³ de solution, additionnée d'1 à 10 cm³ d'eau oxygénée à 110 volumes, pendant une durée de 20 heures. La séparation de la partie minérale et du milieu de lavage est effectuée par centrifugation ou par filtre-presse. Après analyse, la poudre de titanate contient moins de 0,5 % de baryum et 0,07 % de titane solubles.

La chamotte ainsi traitée est testée dans une composition particulière afin de réaliser des condensateurs disques.

Le mélange des espèces est effectué par voie aqueuse. La poudre après séchage est incorporée à un système de liants organiques qui permet l'obtention d'un granulé destiné au pressage de disques (d'un diamètre de 7 mm pour une épaisseur de 1 mm). Le frittage des disques à haute température entraîne la densification du matériau. Après dépôt d'électrodes, les condensateurs subissent un certain nombre de tests électriques rassemblés au tableau II placé en fin de description. Comme précédemment, ce tableau permet une comparaison entre des condensateurs réalisés à partir d'une chamotte non traitée et des condensateurs réalisés à partir d'une chamotte traitée par le procédé de l'invention. Dans ce tableau, la constante diélectrique $\varepsilon$ et le facteur de pertes tg $\delta$ sont donnés pour une température de 25°C. La résistance d'isolement Ri est donnée pour une tension de 100 V. On a également mentionné la valeur de la densité du matériau. On constate que, pour le matériau traité, la constante diélectrique augmente nettement, la résistance d'isolement est améliorée et que la variation de capacité en fonction de la température diminue. Seul le facteur de pertes se détériore.

Les résultats démontrent que les phases riches en baryum perturbent les caractéristiques électriques des condensateurs disques et que le lavage en milieu acide est suffisamment efficace.

Exemple III.

La chamotte concernée est celle de l'exemple I. Le traitement en milieu acide est réalisé de la même manière. La solution ainsi

0244313

obtenue n'est pas traitée par centrifugation mais par des résines solides.

Le mode opératoire est par exemple le suivant. Pour 5 g de titanate de baryum, on ajoute 10 g de résine échangeuse d'ions (résine cationique). Il s'agit par exemple de la résine commercialisée sous la référence ANGA par la société Baker. Après agitation, l'ensemble est filtré sur une toile de nylon pour séparer les grains de résine de la suspension. On élimine ainsi les cations $Ba^{2+}$, $Ti^{4+}$.

A cette solution ainsi filtrée, on peut ajouter 10 g de résine échangeuse d'ions (résine anionique) afin d'éliminer les ions chlorures $Cl^-$ laissés par la solution acide. Il s'agit par exemple de la résine commercialisée sous la référence ANGA 542 de chez Baker. Des échangeurs d'ions liquides peuvent également être utilisés (dodécylamine, triisooctylamine, etc.).

Par filtration, on obtient une suspension de grains de $BaTiO_3$ où la solution est débarrassée des cations baryum et titane, et des anions chlorures.

Après analyse de la poudre de titanate de baryum, le baryum et le titane des phases riches en baryum ainsi que les anions $Cl^-$ ont pratiquement disparu.

Les caractéristiques électriques obtenues avec ces poudres sont identiques à celles décrites tableau I.

L'utilisation d'un tel système permet d'avoir des poudres pratiquement exemptes de phases riches en baryum et on peut facilement envisager une extension à des moyens industriels.

|  | Chamotte non traitée | Chamotte après lavage |
|---|---|---|
| C (nF) | 100 | 65 |
| tg $\delta$ (x10$^{-4}$) | 450 | 100 |
| Ri (G$\Omega$) | 5 | 10 |
| Vieillissement 20 pièces | 20 défauts | 0 défaut |
| $\Delta$C/C à -55°C | - 25,6 % | - 1,9 % |
| $\Delta$C/C à +125°C | - 35,5 % | - 4 % |

Tableau I

|  | Chamotte non traitée | Chamotte après lavage |
|---|---|---|
| $\varepsilon$ | 4060 | 5600 |
| tg $\delta$ (x10$^{-4}$) | 70 | 100 |
| Ri (G$\Omega$) | 1500 | 1800 |
| $\Delta$C/C à +10°C | + 6 % | - 5,6 % |
| $\Delta$C/C à +85°C | - 44 % | - 40,9 % |
| densité | 5,30 | 5,40 |

Tableau II

9

## REVENDICATIONS

1. Procédé de purification d'une chamotte de titanate d'un métal alcalino-terreux des impuretés résultant de phases non désirées de ses constituants, caractérisé en ce qu'il consiste à mettre en présence, pendant une durée déterminée, ladite chamotte avec un milieu de lavage constitué d'une solution faiblement acide additionnée d'eau oxygénée, puis à séparer la partie minérale, représentant le titanate, et le milieu de lavage.

2. Procédé selon la revendication 1, caractérisé en ce que le milieu de lavage est constitué d'une solution comprenant jusqu'à 1 cm$^3$ d'acide chlorhydrique concentré pour 100 cm$^3$ de solution et de 1 à 10 cm$^3$ d'eau oxygénée à 110 volumes.

3. Procédé selon l'une des revendications 1 ou 2, caractérisé en ce que la séparation de la partie minérale du milieu de lavage se fait par centrifugation.

4. Procédé selon l'une des revendications 1 ou 2, caractérisé en ce que la séparation de la partie minérale du milieu de lavage se fait par filtration.

5. Procédé selon l'une des revendications 1 ou 2, caractérisé en ce que la séparation de la partie minérale du milieu de lavage se fait par ajout d'un échangeur d'ions permettant la capture des cations Ba$^{2+}$ et Ti$^{4+}$ puis par filtration.

6. Procédé selon la revendication 5, caractérisé en ce que l'échangeur d'ions est une résine cationique.

7. Procédé selon l'une quelconque des revendications 1 à 6, caractérisé en ce que les anions introduits par le milieu acide sont éliminés par ajout d'un échangeur d'ions correspondant, puis filtration.

8. Procédé selon la revendication 7, caractérisé en ce que l'échangeur d'ions servant à éliminer les anions est une résine anionique.

**Office européen des brevets**

# RAPPORT DE RECHERCHE EUROPEENNE

Numéro de la demande

EP 87 40 0953

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CHEMICAL ABSTRACTS, vol. 93, no. 20, 1980, page 689, résumé 196585g, Columbus, Ohio, US; & JP-A-80 19 006 (MURATA Mfg. CO. LTD) 23-05-1980 * Résumé * | 1 | C 01 G 23/00 C 04 B 35/46 |
| | --- | | |
| A | US-A-3 718 730 (D.L. FREY) * Colonne 2; revendication 1 * | 1 | |
| | --- | | |
| A | US-A-3 063 807 (L.A. KENWORTHY) * Colonnes 11,12; revendications 1-7 * | 5-8 | |
| | --- | | |
| A | GB-A- 953 963 (UNITED STATES OF ATOMIC ENERGY COMMISSION) | | |
| | ----- | | |

| DOMAINES TECHNIQUES RECHERCHES (Int. Cl.4) |
|---|
| C 01 G C 04 B |

Le présent rapport de recherche a été établi pour toutes les revendications

| Lieu de la recherche | Date d'achèvement de la recherche | Examinateur |
|---|---|---|
| LA HAYE | 11-08-1987 | LIBBERECHT-VERBEECK |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82